# EUROPEAN PATENT SPECIFICATION

(11) **EP 3 968 198 B1**
(45) Date of publication and mention of the grant of the patent: **10.06.2026**
(21) Application number: 20924272.6
(22) Date of filing: 16.03.2020
(51) Int. Cl.: G06F 21/56, G06N 20/20, H04L 9/40

(54) **METHOD AND SYSTEM FOR SEARCHING FOR SIMILAR MALICIOUS PROGRAMS ON THE BASIS OF DYNAMIC ANALYSIS RESULTS**
VERFAHREN UND SYSTEM ZUR SUCHE NACH ÄHNLICHEN BÖSARTIGEN PROGRAMMEN AUF DER GRUNDLAGE DYNAMISCHER ANALYSEERGEBNISSE
PROCÉDÉ ET SYSTÈME DE RECHERCHE DE PROGRAMMES MALVEILLANTS SIMILAIRES EN FONCTION DES RÉSULTATS DE LEUR ANALYSE DYNAMIQUE

(30) Priority: 10.03.2020 RU 2020110068
(43) Date of publication of application: 16.03.2022
(73) Proprietor: GROUP-IB GLOBAL PRIVATE LIMITED, 068900 Singapore (SG)
(72) Inventor: PRUDKOVSKIJ, Nikolay Sergeevich, Moscow, 117485 (RU); VOLKOV, Dmitry Aleksandrovich, Moscow, 115563 (RU)
(74) Representative: Pribic, Jelena
(86) International application number: PCT/RU2020/000140
(87) International publication number: WO 2021/182986

(56) References cited:
- EP-A1- 2 916 256
- EP-A1- 3 599 566
- US-A1- 2006 037 080
- US-A1- 2016 127 388
- US-A1- 2017 251 003
- CHANDRAMOHAN MAHINTHAN ET AL: "A scalable approach for malware detection through bounded feature space behavior modeling", 2013 28TH IEEE/ACM INTERNATIONAL CONFERENCE ON AUTOMATED SOFTWARE ENGINEERING (ASE), IEEE, 11 November 2013 (2013-11-11), pages 312 - 322, XP032546944, DOI: 10.1109/ASE.2013.6693090
- ALAHMADI BUSHRA A ET AL: "MalClassifier: Malware family classification using network flow sequence behaviour", 2018 APWG SYMPOSIUM ON ELECTRONIC CRIME RESEARCH (ECRIME), IEEE, 15 May 2018 (2018-05-15), pages 1 - 13, XP033356121, DOI: 10.1109/ECRIME.2018.8376209
- GALAL HISHAM SHEHATA ET AL: "Behavior-based features model for malware detection", JOURNAL OF COMPUTER VIROLOGY AND HACKING TECHNIQUES, SPRINGER PARIS, PARIS, vol. 12, no. 2, 4 June 2015 (2015-06-04), pages 59 - 67, XP035761990, ISSN: 2274-2042, [retrieved on 20150604], DOI: 10.1007/S11416-015-0244-0
- PIRSCOVEANU RADU S ET AL: "Analysis of malware behavior: Type classification using machine learning", 2015 INTERNATIONAL CONFERENCE ON CYBER SITUATIONAL AWARENESS, DATA ANALYTICS AND ASSESSMENT (CYBERSA), CENTRE FOR MULTIDISCIPLINARY RESEARCH, INNOVATION AND COLLABORATION (C-MRIC.ORG), 8 June 2015 (2015-06-08), pages 1 - 7, XP033180641, DOI: 10.1109/CYBERSA.2015.7166128

## Description

### FIELD

This technical solution relates to a computer field, in particular, to the method and system for searching similar malwares based on their dynamic analysis results.

### BACKGROUND

The prior art source US 9,165,142 B1, 20.10.2015, discloses methods for identification of malware family using profile signatures. In some embodiments the malware identification using profile signatures includes execution of potential malware sample in the virtual machine environment (for example, in isolated software environment) and defining, whether the potential malware sample is related to the known malware family based on the profile signature. In some embodiments the virtual machine environment is a virtual machine tool environment for monitoring the potential malware samples during execution.

The prior art source US 2019/0158525 A1, 23.05.2019, also discloses methods of automatic grouping of malwares based on artifacts. In some embodiments the system, process and/or computer software product for automatic grouping of malwares based on artifacts includes receiving of multiple samples to execute automatic analysis of malwares for generation of log files based on automatic malware analysis; processing of log files to extract functions related to malwares; clusterization of multiple samples based on extracted features; and performing an action based on clusterization results.

The proposed solution is different from the solutions known in the art in that the proposed method includes recording the actions executed by a malware in the behavioral report of JSON format. The obtained reports are separated so that one group contains reports comprising similar actions and related to one known malware family. Additionally, it is worth noting that the claimed solution uses classifier ensemble which serves to improve efficiency of searching malwares as compared to individual classifiers, and is also less massive solution than neural network.

### SUMMARY

Technical problem, for solving of which the claimed technical solution is intended, is creation of computer-implementable method and system for searching similar malwares based on their dynamic analysis results defined in the primary claims. Additional variants of this technology implementation are presented in the subclaims.

The technical result consists in searching similar malwares and improving the accuracy of malware referring to the known malware family.

The claimed result is achieved due to implementation of the computer-implementable method for searching similar malwares based on their dynamic analysis results, the method comprising: preparatory step, wherein:
- analyzing at least one malware in an isolated environment;
- recording actions executed by at least one malware in at least one behavioral report;
- separating the behavioral reports accumulated so that at least one group contains reports comprising similar actions and related to one known malware family;
- creating a feature vector based on the known malware family according to the selected fields from the behavioral report;
- training at least one binary classifier on the basis of each obtained feature vector;
- creating at least one ensemble of the binary classifiers based on the pretrained binary classifiers; operating step, wherein:
- analyzing at least one malware;
- recording actions executed by at least one malware in at least one behavioral report;
- starting the ensemble of the binary classifiers trained at the preparatory step;
- calculating, by the ensemble of the binary classifiers, a resulting estimate that the analyzed malware belongs to at least one known malware family.

In the particular embodiment of the described method analyzing malwares in the isolated environment comprises recording at least the following:
- processes started by the program, each process starting parameters;
- files created by each process;
- mutexes created by each process;
- registry keys created by each process;
- virtual machine screen video during malware running;
- network activity;
- harmfulness markers.

In the other particular embodiment of the described method, wherein the report is a report in JSON format comprising at least the following fields regarding malware analysis: IP addresses, registry keys, mutexes, user agents, markers, processes and running programs, request type and domain, files.

In the other particular embodiment of the described method the resulting estimate of the ensemble of the classifiers is the resulting estimate from -1 to 1, where -1 means that at least one malware does not belong the specified family at all, and 1 - that at least one malware belongs the specified family.

In the other particular embodiment of the described method at least one ensemble of the classifiers is configured to detect reports related to at least one malware group.

In the other particular embodiment of the described method the feature vector is composed based on attributes collected using regular expressions from the behavioral report.

In the other particular embodiment of the described method the separation is executed on the basis of a database of tagged known malicious files using at least ssdeep, YARA, IDS, behavioral signatures, specific behavioral features, which could be related to the specific malware family.

The claimed result is also achieved due to the system for searching similar malwares based on their dynamic analysis results, the system comprising:
- a recording module configured to record actions of at least one malware in at least one behavioral report;
- a computing device configured to implement the above method;
- an output module.

### DRAWINGS

Implementation of the technology will be further described in accordance with the attached drawings, which are presented to clarify the technology chief matter and by no means limit the field of the technology . The following drawings are attached to the application:
Fig. 1 illustrates the system for searching similar malwares based on their dynamic analysis results.
Fig. 2 illustrates the computer-implementable method for searching similar malwares based on their dynamic analysis results.
Fig. 3 illustrates the example of the computing device schematic diagram.

### DETAILED DESCRIPTION

Numerous implementation details intended to ensure clear understanding of this technology are listed in the detailed description of the technology implementation given next. However, it is obvious to a person skilled in the art how to use this technology as with the given implementation details as without them. In other cases, the well-known methods, procedures and components have not been described in detail so as not to obscure unnecessarily the present technology .

Besides, it will be clear from the given explanation that the technology is not limited to the given implementation. Numerous possible modifications, changes, variations and replacements retaining the chief matter and form of this technology will be obvious to persons skilled in the art.

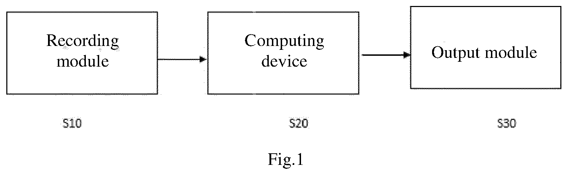

The claimed computer-implementable method for searching similar malwares based on their dynamic analysis results is implemented using the system for searching similar malwares based on their dynamic analysis results illustrated in Fig. 1, which comprises at least: recording module configured to record actions of at least one malware in at least one behavioral report (S10), computing device configured to implement the method for searching similar malwares based on their dynamic analysis results (S20) and output module (S30).

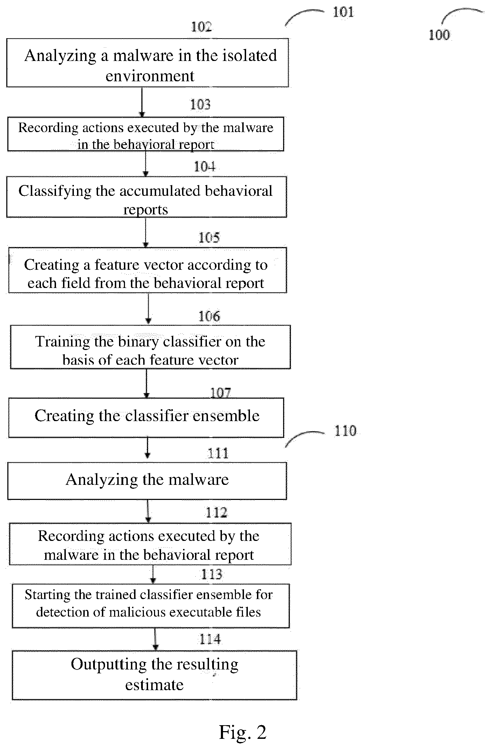

As detailed below in Fig. 2 the claimed computer-implementable method for searching similar malwares based on their dynamic analysis results (100) is implemented as follows.

At preparatory step 101 carrying out the dynamic analysis of known malwares (step 102). For this purpose the malwares run in the isolated environment (sandbox).

At step 103, during program running, recording (for example, logging) all the actions executed by the programs using the recording module (S10), for example:
a. processes started by the program and each process starting parameters;
b. files created by each process;
c. mutexes created by each process;
d. registry keys created by each process;
e. virtual machine screen video during malware running;
f. network activity - all possible information on malware relationship with the network: request type (GET, POST, PUT, HEAD), user agent, domain, IP address, http/https, data transmitted in the request body, etc.;
g. harmfulness markers - what happened during malware running.

For example, creation of hidden or system files is recorded - the first marker. Code execution in unnamed regions of random-access memory - the second marker. Abnormalities in PE file structure are detected - the third marker. Self-replication - the fourth marker. Some markers could be marked in red as suspicious. Step 103 is finished when a sufficient amount of data on malware behavior is accumulated, and this data is provided in the form of behavioral reports (JSON reports).

JSON report consists of multiple fields, from which the following fields are selected: IP addresses, registry keys, mutexes, user agents, markers, processes and running programs, request type and domain, files, and six classifiers are created according to them:
- according to network;
- according to markers;
- according to registry keys;
- according to processes;
- according to mutexes;
- according to files.

At step 104 separating the accumulated behavioral reports so that at the reports combined into one group comprise similar actions and belong to one known malware family (or alternatively to one malware development team).

Behavioral reports are separated on the basis of the database of malware tagged known files, which is tagged, for example, using the following tools: YARA rules, IDS signatures, behavioral signatures, ssdeep utility.

YARA rules are text or binary samples where malware formalized features (signatures) are described. Each description consists of the rules representing a set of lines and some logical expression, on the basis of which the analyzer actuation logic is defined. If at least one rule condition is defined for the investigated file, this file is classified as a malicious file. Such rules are written by experts and renewed continuously.

At starting each file in the isolated environment, it is additionally checked by YARA rules.

IDS signatures are rules for detecting malicious activity by network traffic analysis. If the analyzed file exhibits network activity, its traffic enables to give more exact classification and understand, what namely malware is being analyzed. Executable file compression/encryption is often used to bypass the signature analysis; however, traffic analysis does not depend on what file modifications have been done, therefore, all its modifications are identified exactly.

Behavioral signatures are the rules describing specific features of behavior for specific malware type. It enables to classify exactly the malwares when they do not exhibit network activity and are not detected by other features. Such rules are written by experts and renewed continuously.

ssdeep utility is a tool for recursive computation and comparison of context partial hashes (fuzzy hashing). Similar files are detected at fuzzy hashing. It is worth noting that ssdeep breaks the file into pieces and starts hash function for each of them. Final hash is built according to this hashing result. If only several file bites are changed, hash value of this file will change insignificantly.

Having the database of the malware tagged files it is possible to compare ssdeep hashes and thus detect files with similar code sections, which have not been tagged yet.

Since the files are started in the isolated environment and record all actions executed by the programs, using machine learning enables to detect automatically specific behavioral features of malwares. Having the database of the malware tagged files it is possible to relate specific behavioral features to a specific malware family.

For example, the family, selected before, when starting (running) interacts in a certain way with:
- CPU registries and memory (access microprocessor registries, memory cells, stacks, device ports);
- OS (calls: WinAPI, NativeAPI, syscall);
- changes in the file system (creation of files (including executable), registry entries at program start);
- program networking (how a malware interacts with management centers for data transmission and receipt of commands);
- code interception and injection (code or libraries interception or injection into the other processes).

Comparing the behavioral features to the features of unclassified malwares it is possible to detect malware modifications. Thus, for example, comparing to typical behavior, specific to malware, there is detecting its abnormalities at interaction with the system and making a conclusion about malware belonging to a certain family, but with behavior modification which could be expressed, for example, in creation of some additional libraries or additional system functions call.

The number of verdicts is approximately equal to the number of malware families. I.e. determining that the specific malware file relates to ISRStealer family, and the other malware file relates to Meterpreter family.

Behavioral reports on malware analysis are marked. One or more malware families are assigned to each behavioral report. Multiple families could correspond to one behavioral report, for example, if one malware has downloaded and started the other malware. Marking can be done by hand or automatically using additional special classifiers.

In order to create a classifier ensemble, at least one classifier is trained on at least one vector obtained from at least one field information of the behavioral report.

In order to obtain a feature vector according to one behavioral report field, at step 105 attributes which are recorded into the feature vector comprising boolean values are collected. The vector obtained is transmitted to the classifier input for training.

At step 106 at least one binary classifier is trained on at least one vector obtained from at least one field information of the behavioral report. For example, the first binary classifier is trained on the vector created on the "marker" field basis, the second binary classifier is trained on the vectors obtained from the report fields "user agents", "IP addresses", "request type" and "domain", and then, the rest binary classifiers are created according to this scheme.

There is a weighted system above all binary classifiers, which represents a classifier computing a verdict from each binary classifier and forms, on this basis, a response about this malware belonging to a certain family.

Verdict rendering system - is a weighted system. It takes into account each classifier accuracy (two classes accuracy - this family and all the others). Accuracy is taken based on classifier operation on test data. Then it is normalized so that the amount of all accuracies of 6 classifiers is 1.

Then when classifying a new file, the obtained coefficient is multiplied by the normalized difference "opt_proba" (optimal split for this classifier, above which the malicious file belonging to this family could be considered) and "cur_proba" (result of computing a probability of the malicious file relation to this family according to the specific field).

Then, having summarized all the products (there are 6 of them), obtaining an estimate from -1 to 1, where -1 means "the file does not belong to this family at all", and 1 - "the file definitely belongs to this family".

Thus, at step 107 the binary classifier ensemble for a new family is obtained, which can render a verdict of the malware file belonging to this family in the detection mode.

If after file processing by all family ensembles there is "no" answer from each ensemble (i.e. threshold value has been exceeded in no case), it is considered that this malware file relates to a family not yet known.

At operating step (110) in the isolated environment running the malware whose membership is unknown (step 111). At step (112) recording, similarly to the first step, all the actions executed by the program in the behavioral report. Then, checking the report for membership in one of the report groups selected before. It could be performed, for example, by transforming the report into the vector, and further starting the pretrained classifier ensemble. At step (113) each of the classifiers forms a numerical estimate of probability that the analyzed program belongs to the family of known malwares, which reports this ensemble classifier has been pretrained on. Outputting the resulting estimate through the output module (S30) at step (114).

For example, the features, which have been detected in the operating system during its running, are extracted from the reports. These features are similar to the features which are used for defining the program harmfulness fact. For example, one of the malicious behavior features is the fact of adding a new program into the list of automatically loaded programs at booting the system. However, if for the sandbox analysis the mere fact that the program has been added to the autostart list is important, the search for similar malwares requires to associate this action with the behavior of the specific malware family. Therefore, the following features are important for searching for similar malwares: file name length, file extension, what method of adding to the autostart list is used. The following features are generally used:
- changes in the file system;
- changes in the operating system registry;
- changes in the processes created in the operating system;
- program networking;
- harmfulness markers.

The extracted features are sent for analysis to the binary classifier ensemble, which is to detect from all the features, which features are typical or, vice versa, not typical of the specific family, and based on these features to render a verdict about belonging this malware to the specific malware family.

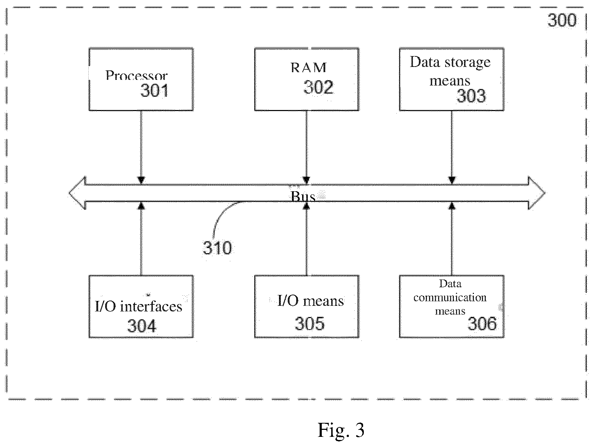

In Fig. 3 hereafter there will be presented the schematic diagram of the computing device (300), processing the data, required for embodiment of the claimed solution.

In general, the device (300) comprises such components as: one or more processors (301), at least one memory (302), data storage means (303), input/output interfaces (304), input/output means (305), networking means (306).

The device processor (301) executes main computing operations, required for functioning the device (300) or functionality of one or more of its components. The processor (301) runs the required machine-readable commands, contained in the random-access memory (302).

The memory (302), typically, is in the form of RAM and comprises the necessary program logic ensuring the required functionality .

The data storage means (403) could be in the form of HDD, SSD, RAID, networked storage, flash-memory, optical drives (CD, DVD, MD, Blue-Ray disks), etc. The means (303) enables to store different information, e.g. the above-mentioned JSON reports, files with data sets obtained from different hosts, databases comprising records of time intervals recorded in different periods for each user, etc.

The interfaces (304) are the standard means for connection and operation with server side, e.g. USB, RS232, RJ45, LPT, COM, HDMI, PS/2, Lightning, FireWire, etc.

Selection of interfaces (304) depends on the specific device (300), which could be a personal computer, mainframe, server cluster, thin client, smartphone, laptop, etc.

As input/output means (305) there could be used: keyboard, joystick, display (touch-screen display), projector, touch pad, mouse, trackball, light pen, loudspeakers, microphone, etc.

Networking means (306) are selected from a device providing network data receiving and transfer, e.g. Ethernet-card, WLAN/Wi-Fi module, Bluetooth module, BLE module, NFC module, IrDa, RFID module, GSM modem, etc. Making use of the means (305) provides an arrangement of data exchange through wire or wireless data communication channel, e.g. WAN, PAN, LAN, Intranet, Internet, WLAN, WMAN or GSM.

The components of the device (300) are interconnected by the common data bus (310).

The application materials have represented the preferred embodiment of the claimed technical solution, which shall not be used as limiting the other particular embodiments, which are not beyond the claimed scope of protection and are obvious to persons skilled in the art.

## Claims

1. A computer-implemented method for searching similar malwares based on their dynamic analysis results, the method comprising:
a preparatory step, comprising:
- analyzing a plurality of malwares in an isolated environment, comprising recording at least the following:
- processes started by the program, each process starting parameters; files created by each process;
- mutexes created by each process;
- registry keys created by each process;
- virtual machine screen video during malware running;
- network activity; and
- harmfulness markers;
- recording actions executed by each of the plurality of malwares in a plurality of behavioral reports;
- separating the plurality of behavioral reports accumulated so the reports combined into one group comprise similar actions and belong to one known malware family;
- creating a feature vector based on the known malware family according to the selected fields from the plurality of behavioral reports;
- training a plurality of binary classifiers on the basis of each obtained feature vector; and
- creating at least one ensemble of the binary classifiers based on the plurality of pretrained binary classifiers; and
an operating step, comprising:
- analyzing at least one malware;
- recording actions executed by at least one malware in at least one behavioral report;
- starting the ensemble of the binary classifiers trained at the preparatory step; and
- calculating, by the ensemble of the binary classifiers, a resulting estimate that the analyzed malware belongs to at least one known malware family.

2. The method of claim 1, wherein the report is a report in JSON format comprising at least the following fields regarding malware analysis: IP addresses, registry keys, mutexes, user agents, markers, processes and running programs, request type and domain, files.

3. The method of claim 1, wherein the resulting estimate of the ensemble of the classifiers is the resulting estimate from -1 to 1, where -1 means that at least one malware does not belong to the specified family at all, and 1 means that at least one malware definitely belongs to the specified family.

4. The method of claim 1, wherein at least one ensemble of the classifiers is configured to detect reports related to at least one malware group.

5. The method of claim 1, wherein the feature vector is composed based on attributes collected using regular expressions from the behavioral report.

6. The method of claim 1, wherein the separation is executed on the basis of a database of tagged known malicious files using at least ssdeep, YARA, IDS, behavioral signatures, specific behavioral features, which could be related to the specific malware family.

7. A system for searching similar malwares based on their dynamic analysis results, the system comprising:
- a recording module configured to record actions of at least one malware in at least one behavioral report;
- a computing device configured to implement the above method according to claims 1-6; and
- an output module.

## Patentansprüche

1. Computerimplementiertes Verfahren zum Suchen ähnlicher Schadsoftwares auf der Grundlage ihrer dynamischen Analyseergebnisse, wobei das Verfahren Folgendes umfasst:
einen Vorbereitungsschritt, umfassend:
- Analysieren einer Vielzahl von Schadsoftwares in einer isolierten Umgebung, umfassend das Aufzeichnen von mindestens dem Folgenden:
- von dem Programm gestartete Prozesse sowie Startparameter jedes Prozesses; von jedem Prozess erzeugte Dateien;
- von jedem Prozess erzeugte Mutexe;
- von jedem Prozess erzeugte Registrierungsschlüssel;
- Bildschirmvideo der virtuellen Maschine während der Ausführung der Schadsoftware;
- Netzwerkaktivität; und
- Schädlichkeitsindikatoren;
- Aufzeichnen von durch jede der Vielzahl von Schadsoftware ausgeführten Aktionen in einer Vielzahl von Verhaltensberichten;
- Trennen der Vielzahl von gesammelten Verhaltensberichten, so dass die in einer Gruppe zusammengefassten Berichte ähnliche Aktionen umfassen und zu einer bekannten Schadsoftwarefamilie gehören;
- Erzeugen eines Merkmalsvektors auf der Grundlage der bekannten Schadsoftwarefamilie entsprechend den ausgewählten Feldern aus der Vielzahl von Verhaltensberichten;
- Trainieren einer Vielzahl von binären Klassifikatoren auf der Grundlage jedes erhaltenen Merkmalsvektors; und
- Erzeugen mindestens eines Ensembles der binären Klassifikatoren auf der Grundlage der Vielzahl von vortrainierten binären Klassifikatoren; und
einen Betriebsschritt, umfassend:
- Analysieren mindestens einer Schadsoftware;
- Aufzeichnen der von mindestens einer Schadsoftware ausgeführten Aktionen in mindestens einem Verhaltensbericht;
- Starten des Ensembles von binären Klassifikatoren, die im Vorbereitungsschritt trainiert wurden; und
- Berechnen, durch das Ensemble der binären Klassifikatoren, einer resultierenden Schätzung, dass die analysierte Schadsoftware zu mindestens einer bekannten Schadsoftwarefamilie gehört.

2. Verfahren nach Anspruch 1, wobei der Bericht ein Bericht im JSON-Format ist, der mindestens die folgenden Felder bezüglich der Schadsoftwareanalyse umfasst: IP-Adressen, Registrierungsschlüssel, Mutexe, Benutzeragenten, Indikatoren, Prozesse und laufende Programme, Anfragetyp und Domäne, Dateien.

3. Verfahren nach Anspruch 1, wobei die resultierende Schätzung des Ensembles der Klassifikatoren die resultierende Schätzung von -1 bis 1 ist, in der -1 bedeutet, dass mindestens eine Schadsoftware auf keinen Fall zu der angegebenen Familie gehört, und 1 bedeutet, dass mindestens eine Schadsoftware definitiv zu der angegebenen Familie gehört.

4. Verfahren nach Anspruch 1, wobei mindestens ein Ensemble der Klassifikatoren so ausgebildet ist, dass sie Berichte erkennt, die mit der mindestens einen Schadsoftwaregruppe in Zusammenhang stehen.

5. Verfahren nach Anspruch 1, wobei der Merkmalsvektor auf der Grundlage von Attributen zusammengestellt wird, die unter Verwendung regulärer Ausdrücke aus dem Verhaltensbericht gesammelt werden.

6. Verfahren nach Anspruch 1, wobei die Trennung auf der Grundlage einer Datenbank mit markierten bekannten schädlichen Dateien unter Verwendung von mindestens ssdeep, YARA, IDS, Verhaltenssignaturen, spezifischen Verhaltensmerkmalen, die mit der konkreten Schadsoftwarefamilie in Zusammenhang stehen könnten, durchgeführt wird.

7. System zum Suchen ähnlicher Schadsoftwares auf der Grundlage ihrer dynamischen Analyseergebnisse, wobei das System Folgendes umfasst:
- ein Aufzeichnungsmodul, das so ausgebildet ist, dass es die Aktionen mindestens einer Schadsoftware in mindestens einem Verhaltensbericht aufzeichnet;
- eine Rechenvorrichtung, die so ausgebildet ist, dass sie das vorstehende Verfahren nach den Ansprüchen 1 bis 6 ausführt; und
- ein Ausgabemodul.

## Revendications

1. Procédé mis en œuvre par ordinateur pour rechercher des logiciels malveillants similaires sur la base des résultats de leur analyse dynamique, le procédé comprenant :
une étape préparatoire, comprenant:
- analyser une pluralité de logiciels malveillants dans un environnement isolé, comprenant l'enregistrement au moins des éléments suivants :
- les processus lancés par le programme, ainsi que les paramètres de démarrage de chaque processus ; les fichiers créés par chaque processus ;
- les mutex créés par chaque processus ;
- les clés de registre créées par chaque processus ;
- la vidéo de l'écran de la machine virtuelle pendant l'exécution du logiciel malveillant ;
- l'activité réseau ; et
- les marquers de nocivité ;
- enregistrer les actions exécutées par chacun des différents logiciels malveillants dans une pluralité de rapports comportementaux ;
- séparer la pluralité de rapports comportementaux accumulés de manière à ce que les rapports regroupés en un seul groupe comprennent des actions similaires et appartiennent à une famille de logiciels malveillants connue ;
- créer un vecteur de caractéristiques basé sur la famille de logiciels malveillants connue, en fonction des champs sélectionnés parmi la pluralité de rapports comportementaux ;
- entraîner une pluralité de classificateurs binaires à partir de chaque vecteur de caractéristiques obtenu ; et
- créer au moins un ensemble de classificateurs binaires à partir de la pluralité de classificateurs binaires pré-entraînés ; et
une étape opérationnelle, comprenant :
- analyser au moins un logiciel malveillant ;
- enregistrer les actions exécutées par au moins un logiciel malveillant dans au moins un rapport comportemental ;
- démarrer l'ensemble des classificateurs binaires entraînés lors de l'étape préparatoire ; et
- calculer, par l'ensemble des classificateurs binaires, une estimation résultante selon laquelle le logiciel malveillant analysé appartient à au moins une famille de logiciels malveillants connue.

2. Procédé selon la revendication 1, dans lequel le rapport est un rapport au format JSON comprenant au moins les champs suivants relatifs à l'analyse des logiciels malveillants : adresses IP, clés de registre, mutex, agents utilisateurs, marqueurs, processus et programmes en cours d'exécution, type de requête et domaine, fichiers.

3. Procédé selon la revendication 1, dans lequel l'estimation résultante de l'ensemble des classificateurs est l'estimation résultante comprise entre -1 et 1, où -1 signifie qu'au moins un logiciel malveillant n'appartient absolument pas à la famille spécifiée, et 1 signifie qu'au moins un logiciel malveillant appartient sans aucun doute à la famille spécifiée.

4. Procédé selon la revendication 1, dans lequel au moins un ensemble de classificateurs est configuré pour détecter des rapports liés à au moins un groupe de logiciels malveillants.

5. Procédé selon la revendication 1, dans lequel le vecteur de caractéristiques est constitué à partir d'attributs recueillis du rapport comportemental à l'aide d'expressions régulières.

6. Procédé selon la revendication 1, dans lequel la séparation est effectuée à partir d'une base de données de fichiers malveillants connus et étiquetés, en utilisant au moins ssdeep, YARA, IDS, des signatures comportementales et des caractéristiques comportementales spécifiques pouvant être associées à une famille spécifique de logiciels malveillants.

7. Système permettant de rechercher des logiciels malveillants similaires sur la base des résultats de leur analyse dynamique, le système comprenant :
- un module d'enregistrement configuré pour enregistrer les actions d'au moins un logiciel malveillant dans au moins un rapport comportemental ;
- un dispositif informatique configuré pour mettre en œuvre le procédé susmentionné selon les revendications 1 à 6 ; et
- un module de sortie.
